# EUROPÄISCHE PATENTANMELDUNG

(11) **EP 3 821 714 A1**
(43) Veröffentlichungstag der Anmeldung: **19.05.2021**
(21) Anmeldenummer: 19209822.6
(22) Anmeldetag: 18.11.2019
(51) Int. Cl.: A23F 3/06, A23F 3/14, A23F 3/34, A23F 3/40

(54) **VERFAHREN ZUR HERSTELLUNG VON AUFGUSSFÄHIGEM TEE ODER AUFGUSSFÄHIGEN TEEÄHNLICHEN ERSATZSTOFFEN UND DURCH DAS VERFAHREN HERSTELLBARE AUFGUSSFÄHIGE WARE**

(71) Anmelder: Teekanne GmbH & Co. KG, 40549 Düsseldorf (DE)
(72) Erfinder: Willmeroth, Antonia, 40217 Düsseldorf (DE); Henrichs, Jens, 47495 Rheinberg (DE); Maßmann, Felix, 40217 Düsseldorf (DE)
(74) Vertreter: Grünecker Patent- und Rechtsanwälte PartG mbB

(57) **Zusammenfassung**

Die Erfindung betrifft ein Verfahren zur Herstellung von aufgussfähigem Tee oder aufgussfähigen teeähnlichen Ersatzstoffen, umfassend die folgenden Schritte: a) Bereitstellen eines Rohmaterials umfassend Tee und/oder teeähnliche Ersatzstoffe; und b) Rösten des Rohmaterials bei einer Temperatur von 100°C oder mehr. Die Erfindung betrifft außerdem durch das Verfahren herstellbare, aufgussfähige Ware enthaltend Tee und/oder teeähnliche Ersatzstoffe.

## Beschreibung

Die Erfindung betrifft ein Verfahren zur Herstellung von aufgussfähigem Tee oder aufgussfähigen teeähnlichen Ersatzstoffen und eine durch dieses Verfahren herstellbare aufgussfähige Ware.

Unter dem Begriff Tee im eigentlichen Sinne fallen Blätter und Aufguss der Teepflanze (Camellia sinensis). Die frischen Teeblätter werden nach bestimmten Verfahren durch Trocknen, Zerkleinern und Oxidation zu einem Rohmaterial verarbeitet, wobei je nach Grad der Oxidation zwischen verschiedenen Teesorten, beispielsweise grünem Tee oder schwarzen Tee, unterschieden wird. Die übliche Form der Teezubereitung sieht vor, das so erhaltene Rohmaterial mit heißem Wasser aufzubrühen.

Neben den Blättern der Teepflanze finden auch getrocknete Früchte, Samen, Wurzeln oder Kräuter bei der Zubereitung von Aufgussgetränken Verwendung. Diese Rohstoffe werden im Rahmen der vorliegenden Erfindung als teeähnliche Ersatzstoffe bezeichnet. Auch diese Ersatzstoffe werden in getrockneter und zerkleinerter Form mit heißem Wasser zu Aufgussgetränken aufgebrüht.

Es ist bekannt, aufgussfähiges Rohmaterial durch Rösten zur geschmacklichen Veränderung vorzubehandeln.

So offenbart beispielsweise die EP 0 861 595 A1 ein Verfahren zur Herstellung von aufgussfähigen Blättern der Pflanze *Gymnema inodorum* durch Trocknen und anschließendes Rösten für 0,5 Minuten bis 30 Minuten bei einer Temperatur von 150°C bis 200°C. Durch das Rösten sollen der Geschmack verbessert und gleichzeitig Inhaltsstoffe erhalten werden, die die Glucoseaufnahme inhibieren.

Es ist außerdem bekannt, den Geschmack von aufgussfähigem Rohmaterial durch die Zugabe von Aromen zu beeinflussen. Allerdings erfordert dies typischerweise auch die Zugabe von Trägerstoffen, um eine Aufnahme der Aromen durch das Rohmaterial zu ermöglichen. Da Trägerstoffe, die selbst keine geschmacksverändernde Wirkung haben, in der lebensmittelrechtlich erforderlichen Zutatenliste den Aromen zugeordnet werden, kann beim Verbraucher der irreführende Eindruck entstehen, eine aromatisierte, aufgussfähige Ware enthalte einen übermäßig großen Anteil an Aromen. Aus diesem Grund besteht ein Interesse daran, den Anteil an Trägerstoffen zu reduzieren.

Vor diesem Hintergrund stellt sich die vorliegende Erfindung die Aufgabe, ein Verfahren zur Herstellung von aufgussfähigem Tee oder aufgussfähigen teeähnlichen Ersatzstoffen bereitzustellen, mit dem auf einfache Weise eine Keimreduzierung, Trocknung sowie eine geschmackliche und farbliche Verbesserung des Tees bzw. der teeähnlichen Ersatzstoffe erzielt werden kann.

Diese Aufgabe wird gemäß der Erfindung durch ein Verfahren zur Herstellung von aufgussfähigem Tee oder aufgussfähigen teeähnlichen Ersatzstoffen gelöst, das die folgenden Schritte umfasst:
a) Bereitstellen eines Rohmaterials umfassend Tee und/oder teeähnliche Ersatzstoffe; und
b) Rösten des Rohmaterials bei einer Temperatur von 100°C oder mehr.

Das erfindungsgemäße Verfahren ermöglicht eine Trocknung und Keimreduzierung des Rohmaterials bei gleichzeitiger Geschmacksverbesserung.

Das erfindungsgemäße Verfahren eignet sich insbesondere zur Verarbeitung teeähnlicher Ersatzstoffe. Bei teeähnlichen Ersatzstoffen lässt sich durch das erfindungsgemäße Rösten eine gezielte Geschmacksveränderung und -verbesserung erzielen. Als teeähnliche Ersatzstoffe werden im Rahmen der Erfindung vorzugsweise getrocknete Früchte, getrocknete Wurzeln, getrocknete Samen und/oder getrocknete Kräuter eingesetzt. Besonders gute Ergebnisse werden mit der Verwendung von getrockneten Früchten, Samen oder Wurzeln erzielt.

Teeähnliche Ersatzstoffe sind beispielsweise Anis, Apfel, Aroniabeeren, Baldrianwurzel, Birne, Bockshornkleesamen, Brombeeren, Cranberry, Fenchel, Galgantwurzel, Ginseng, Guaranasaat, Hagebutten, Heidelbeeren, Hibiskusblüten, Himbeeren, Holunderbeeren, Hopfen, Ingwerwurzel, Johannisbeeren, Kakaobohnen, Kardamon, Karotten, Kolanuss, Kümmel, Kurkuma, Limettenschalen, Orangenschalen, Pfeffer, Rote Beete, Sanddornbeeren, Sternanis, Süßholzwurzel, Taigawurzel, Wacholderbeeren, Zichorienwurzel, Zitronenschalen oder Mischungen davon.

In einer bevorzugten Ausführungsform umfasst das Rohmaterial Anis, Apfel, Fenchel, Ginseng, Hagebutten, Hibiskusblüten, Ingwerwurzel, Kümmel, Kurkuma, Rotbusch, Süßholzwurzel, Zichorienwurzel oder Mischungen davon. Insbesondere bei diesen teeähnlichen Ersatzstoffen führt das erfindungsgemäße Verfahren zu einer überraschend Geschmacksverbesserung.

Das in Schritt a) bereitgestellte Rohmaterial ist typischerweise bereits getrocknet. Im Fall von Tee handelt es sich um einen nach herkömmlichen Verfahren hergestellten Tee, der zunächst zerkleinert, getrocknet und anschließend oxidiert wurde.

Das in Schritt a) bereitgestellte Rohmaterial weist vorzugsweise eine Restfeuchte von bis zu 20 Gewichtsprozent, besonders bevorzugt bis zu 10 Gewichtsprozent, am meisten bevorzugt bis zu 5 Gewichtsprozent auf.

Das in Schritt a) bereitgestellte Rohmaterial weist vorzugsweise eine mittlere Korngröße von 0,1 bis 10 mm, besonders bevorzugt 0,2 bis 5 mm auf. Die mittlere Korngröße wird vorzugsweise durch Siebung ermittelt.

Das Rösten kann wahlweise bei hoher oder niedriger Temperatur durchgeführt werden. In einer Ausführungsform beträgt die Temperatur des Rohmaterials während des Röstens in Schritt a) vorzugsweise 100°C bis 300°C, besonders bevorzugt 140°C bis 250°C, am meisten bevorzugt 150°C bis 200°C. In einer alternativen Ausführungsform beträgt die Temperatur des Rohmaterials während des Röstens in Schritt a) vorzugsweise 100°C bis 220°C, besonders bevorzugt 100°C bis 180°C, am meisten bevorzugt 100°C bis 140°C. Die Temperatur wird vorzugsweise für 1 bis 30 Minuten gehalten.

Eine niedrige Rösttemperatur im Bereich von 100°C bis 140°C führt insbesondere in Kombination mit einem Rohmaterial umfassend Anis, Apfel, Fenchel, Ginseng, Hagebutten, Hibiskusblüten, Ingwerwurzel, Kümmel, Kurkuma, Rotbusch, Süßholzwurzel, Zichorienwurzel oder Mischungen davon zu guten Ergebnissen, wie einer deutlichen geschmacklichen Verbesserung.

Das Rösten kann in einer dafür geeigneten an sich bekannten Apparatur durchgeführt werden. Beispielsweise kann das Rohmaterial auf einer heißen Oberfläche, wie einer beheizten Metall- oder Steinplatte, in einem heißen Luftstrom oder unter einem Heizstrahler geröstet werden. Als Heizstrahler können beispielsweise ein elektrisches Heizelement, ein Gasbrenner oder eine Infrarotlampe verwendet werden. In einer bevorzugten Ausführungsform erfolgt das Rösten durch Infrarotbestrahlung.

Das Rösten kann als kontinuierliches Verfahren durchgeführt werden, wobei das Rohmaterial mittels einer geeigneten Fördereinrichtung durch einen Bereich mit der erforderlichen Rösttemperatur geführt wird. Als Fördereinrichtung dient beispielsweise ein Förderband, oder eine Förderanlage nach dem Prinzip der archimedischen Schraube. Das Rohmaterial kann auch kontinuierlich durch eine Wirbelschichtanlage durchgeführt werden.

Das Rösten kann ebenfalls als Batchprozess durchgeführt werden. Hierbei kann das Rohmaterial beispielsweise in einer rotierenden Trommel oder einer Wirbelschicht erhitzt werden, um ein möglichst gleichmäßiges Röstergebnis zu erzielen.

In einer bevorzugten Ausführungsform umfasst das Verfahren die zusätzlichen Schritte
c) Zugabe von Wasser und/oder einer geschmacksgebenden Flüssigkeit;
d) Trocknen des Rohmaterials.

Vorzugsweise werden das Wasser und/oder die geschmacksgebende Flüssigkeit in einer Gesamtmenge von mindestens 5 Gewichtsprozent, besonders bevorzugt 5 Gewichtsprozent bis 50 Gewichtsprozent, am meisten bevorzugt 10 Gewichtsprozent bis 40 Gewichtsprozent bezogen auf die Gesamtmasse von Rohmaterial, Wasser und Flüssigkeit zugegeben.

Schritt c) erfolgt vorzugsweise umittelbar nach dem Rösten von Schritt b). Die Temperatur des Rohmaterials zum Zeitpunkt der Zugabe von Wasser und/oder der geschmacksgebenden Flüssigkeit entspricht vorzugsweise der Rösttemperatur.

Durch Einstellung der Menge an zugegebenen Wasser bzw. geschmacksgebender Flüssigkeit kann das geröstete Rohmaterial abgekühlt werden. Vorzugsweise wird das Rohmaterial durch die Zugabe auf eine Temperatur von weniger als 100°C, besonders bevorzugt 60°C bis 95°C, am meisten bevorzugt 80°C bis 90°C abgekühlt.

Das Wasser bzw. die geschmacksgebende Flüssigkeit werden vorzugsweise auf das geröstete Rohmaterial aufgesprüht. Dies kann in derselben Apparatur wie das Rösten oder in einer getrennten Apparatur erfolgen. Vorzugsweise wird das Wasser bzw. die geschmacksgebende Flüssigkeit von mehreren Seiten auf das Rohmaterial aufgesprüht, um eine gleichmäßige Benetzung des Rohmaterials zu erzielen. Beispielsweise erfolgt Schritt c) in einer Wirbelschichtanlage, in der das geröstete Rohmaterial in einem Trägergasstrom, beispielsweise einem Luftstrom, aufgewirbelt wird. Durch die Verwendung einer Wirbelschichtanlage wird eine besonders gleichmäßige Benetzung des Rohmaterials mit der aufgesprühten Flüssigkeit erzielt. Dies fördert insbesondere die Aufnahme der geschmacksgebenden Flüssigkeit durch das Rohmaterial.

In einer bevorzugten Ausführungsform wird dem Rohmaterial mindestens eine geschmacksgebenden Flüssigkeit zugegeben. Durch das vorangehende Rösten des Rohmaterials erhält das Rohmaterial eine bessere Aufnahmefähigkeit für die geschmacksgebende Flüssigkeit. Dies ermöglicht die gezielte Zugabe von geschmacksgebenden Zusatzstoffen, mit denen der Geschmack des aufgussfähigen Tees bzw. teeähnlichen Erzeugnisses gezielt beeinflusst werden kann.

Die geschmacksgebende Flüssigkeit umfasst vorzugsweise mindestens ein Aroma. Das Aroma selbst kann eine Flüssigkeit, z.B. ein Öl sein, oder als wässrige oder ölige Suspension oder Lösung vorliegen.

Als Aroma werden im Rahmen der Erfindung einzelne Verbindungen oder Zusammensetzungen außer Tee oder teeähnlichen Ersatzstoffen bezeichnet, die den Geruch und/oder Geschmack des Tees und/oder der teeähnlichen Ersatzstoffe zum Nutzen für den Verbraucher verbessern beziehungsweise verändern. Das vorliegende Verfahren sieht die Verwendung sowohl von Aromastoffen als auch Aromaextrakten vor. Aromastoffe sind definierte chemische Stoffe, zu denen durch chemische Synthese gewonnene oder durch chemische Verfahren isolierte Aromastoffe und natürliche Aromastoffe gehören. Aromaextrakte sind andere Aromen als definierte chemische Stoffe, die durch geeignete physikalische, enzymatische oder mikrobiologische Verfahren aus Stoffen pflanzlichen, tierischen oder mikrobiologischen Ursprungs gewonnen und als solche verwendet oder für den menschlichen Verzehr aufbereitet werden.

Geeignete Aromen sind beispielsweise Öle, insbesondere ätherische Öle, aufkonzentrierte Geschmacksstoffe oder wässrige Pflanzenextrakte. Als wässrige Pflanzenextrakte werden im Rahmen dieser Erfindung sämtliche wässrige Zusammensetzungen bezeichnet, die geschmacksgebende Pflanzenbestandteile enthalten, wie beispielsweise Säfte, Saftkonzentrate, Pürrees oder Suspensionen.

Als Aromen geeignete Öle sind beispielsweise Anisöl, Kardamonöl, Cassiaöl, Citronellöl, Dillkrautöl, Eukalyptusöl, Fenchelöl, Grapefruitöl, Ingweröl, Kamillenöl, Krauseminzöl, Kümmelöl, Lemongrasöl, Limettenöl, Minzöl, Muskatsnussöl, Nelkenöl, Orangenöl, Pfefferminzöl, Pfefferöl, Rosenöl, Salbeiöl, Sternanisöl, Walchoderbeeröl, Zimtrindenöl, Zitronenöl oder Mischungen davon.

Besonders geeignet sind außerdem Pflanzenextrakte von Acai, Acerola, Ananas, Apfel, Aprikose, Aronia, Banane, Birne, Blutorange, Boysenbeere, Brombeere, Dattel, Erbse, Erdbeere, Feige, Granatapfel, Grapefruit, Guave, Gurke, Hagebutte, Heidelbeere, Himbeere, Holunderbeere, Holunderblüte, Honigmelone, Ingwer, Johannisbeere, Kaktusfeige, Karotte, Kiwi, Kokosnuss, Kürbis, Limette, Lychee, Mais, Mandarine, Mango, Maracuja/Passionsfrucht, Mirabelle, Moosbeere, Orange, Papaya, Paprika, Pastinake, Petersilie, Pfirsich, Pflaume, Preiselbeere, Quitte, Rhabarber, Rosinen, Rote Beete, Salat, Sanddorn, Sauerkirsche, Schlehe, Sellerie, Stachelbeere, Süßkirsche, Topinambur, Wassermelone, Weintraube, Weiße Beete, Zucchini, Zitrone oder Mischungen davon.

Weitere geeignete Aromen sind beispielsweise Acerola-Aroma, Aloe Vera-Aroma, Amarena-Aroma, Ananas-Aroma, Apfel-Aroma, Apfelstrudel-Aroma, Aprikosen-Aroma, Bananen-Aroma, Beeren-Aroma, Bergamotte-Aroma, Birnen-Aroma, Blueberry-Aroma, Blutorangen-Aroma, Boysenbeer-Aroma, Bratapfel-Aroma, Brauner Zucker-Aroma, Brombeer-Aroma, Chai-Aroma, Citrus-Mix-Aroma, Cranberry-Aroma, Dattel-Aroma, Drachenfrucht-Aroma, Erdbeer-Aroma, Exotic Punch-Aroma, Feigen-Aroma, Früchte-Aroma, Gebäck-Aroma, Glühwein-Aroma, Goji-Aroma, Granatapfel-Aroma, Grapefruit-Aroma, Heidelbeer-Aroma, Heidelbeer-Aroma, Himbeer Aroma, Holunderbeeren-Aroma, Holunderblüten-Aroma, Honig-Aroma, Ingwer-Aroma, Irish Cream-Aroma, Irish-Cream-Aroma, Jasmin-Aroma, Kaktusfeigen-Aroma, Karamell-Aroma, Karamell-Aroma, Käsekuchen-Aroma, Kirsch-Aroma, Kirsch-Aroma, Krauseminze-Aroma, Lemongras-Aroma, Limetten-Aroma, Limetten-Aroma, Litschi-Aroma, Mango-Aroma, Marzipan-Aroma, Mojito-Aroma, Muffin-Aroma, Multifrucht-Aroma, Orangen-Aroma, Pannacotta-Aroma, Passionsfrucht-Aroma, Pfefferminze-Aroma, Pfirsich-Aroma, Pflaumen-Aroma, Rhabarber-Aroma, Rum-Aroma, Sahne-Aroma, Sanddorn-Aroma, Schokoladen-Aroma, Schwarze Johannisbeer-Aroma, Spekulatius-Aroma , Sternanis-Aroma, Trauben-Aroma, Vanille-Aroma, Waldfrucht-Aroma, Zimt-Aroma, Zitronen-Aroma oder Mischungen davon.

In einer bevorzugten Ausführungsform wird als geschmacksgebende Flüssigkeit ein Fruchtsaft oder Fruchtsaftkonzentrat verwendet.

Dadurch, dass die Aufnahmefähigkeit des Rohmaterials durch das vorangehende Rösten verbessert ist, ist es nicht unbedingt nötig, der geschmacksgebenden Flüssigkeit zusätzliche Trägerstoffe zuzusetzen. Der Anteil an Trägerstoffen beträgt deswegen vorzugsweise 20 Gewichtsprozent oder weniger, bevorzugt 5 Gewichtsprozent oder weniger, weiter bevorzugt 2 Gewichtsprozent oder weniger, besonders bevorzugt 1 Gewichtsprozent oder weniger, am meisten bevorzugt 0,1 Gewichtsprozent oder weniger, bezogen auf die Gesamtmasse von Rohmaterial, geschmacksgebender Flüssigkeit und Trägerstoffe.

Als Trägerstoff werden im Rahmen der Erfindung Substanzen bezeichnet, die helfen, Aromen in dem Rohmaterial gleichmäßig zu verteilen, ohne dass die Trägerstoffe selbst eine geschmacksgebende Funktion haben. Insbesondere werden als Trägerstoffe Kohlenhydrate, insbesondere Polysaccharide bezeichnet. Beispiele für derartige Trägerstoffe sind Sucrose, Glucose, Laktose, Maltose, Fructose, Ribose, Dextrose, Isomalt, Sorbitol, Mannitol, Xylitol, Lactitol, Maltitol, Pentatol, Arabinose, Pentose, Xylose, Galactose, Trehalose, hydrierter Maissirup, Maltodextrin, Agar, Carrageen, Gummi arabicum, Polydextrose oder Mischungen davon. Insbesondere kann mit der vorliegenden Erfindung auf die Zugabe von Gummi arabicum und Maltodextrin verzichtet und deren Anteil an dem Rohmaterial somit auf 20 Gewichtsprozent oder weniger, bevorzugt 5 Gewichtsprozent oder weniger, weiter bevorzugt 2 Gewichtsprozent oder weniger, besonders bevorzugt 1 Gewichtsprozent oder weniger, am meisten bevorzugt 0,1 Gewichtsprozent oder weniger begrenzt werden.

Das Rohmaterial wird abschließend in Schritt d) vorzugsweise bis zu einer Restfeuchte von 5 Gewichtsprozent oder weniger getrocknet, um die fertige aufgussfähige Ware zu erhalten.

Das Trocknen erfolgt vorzugsweise bei einer Temperatur mindestens 80°C, bevorzugt mindestens 110°C. In einer bevorzugten Ausführungsform beträgt die Trocknungstemperatur 80°C bis 140°C, besonders bevorzugt 110°C bis 140°C.

Die Erfindung betrifft außerdem die durch das oben beschriebene Verfahren herstellbare aufgussfähige Ware enthaltend Tee und/oder teeähnliche Ersatzstoffe.

Der Anteil an Tee oder teeähnlichen Ersatzstoffen bezogen auf die Masse der fertigen aufgussfähigen Ware beträgt vorzugsweise 60 bis 99,99 Gewichtsprozent, besonders bevorzugt 90-99,9 Gewichtsprozent.

Sofern dem gerösteten Rohmaterial in Schritt c) ein Aroma zugegeben wird, beträgt der Anteil an Aroma bezogen auf die Masse der fertigen aufgussfähigen Ware vorzugsweise 1 bis 30 Gewichtsprozent, besonders bevorzugt 10 bis 30 Gewichtsprozent, am meisten bevorzugt 15 bis 25 Gewichtsprozent. Der Anteil an Aromen wird anhand der nichtwässrigen Bestandteile der Aromen berechnet.

Vorzugsweise umfasst die fertige aufgussfähige Ware keine oder nur einen geringen Anteil an Trägerstoffen. Der Anteil an Trägerstoffen bezogen auf die Masse der fertigen aufgussfähigen Ware beträgt vorzugsweise 2 Gewichtsprozent oder weniger, besonders bevorzugt 1 Gewichtsprozent oder weniger, am meisten bevorzugt 0,1 Gewichtsprozent oder weniger.

In einer besonders bevorzugten Ausführungsform umfasst die fertige aufgussfähige Ware weder Maltodextrin noch Gummi arabicum bzw. nur einen geringen Anteil davon. Der Anteil an Maltodextrin und Gummi arabicum bezogen auf die Masse der fertigen aufgussfähigen Ware beträgt vorzugsweise 2 Gewichtsprozent oder weniger, besonders bevorzugt 1 Gewichtsprozent oder weniger, am meisten bevorzugt 0,1 Gewichtsprozent oder weniger.

## Patentansprüche

1. Verfahren zur Herstellung von aufgussfähigem Tee oder aufgussfähigen teeähnlichen Ersatzstoffen, umfassend die folgenden Schritte:
a) Bereitstellen eines Rohmaterials umfassend Tee und/oder teeähnliche Ersatzstoffe; und
b) Rösten des Rohmaterials bei einer Temperatur von 100°C oder mehr.

2. Verfahren nach Anspruch 1, wobei das Rohmaterial getrocknete Früchte, getrocknete Wurzeln, getrocknete Samen und/oder getrocknete Kräuter umfasst.

3. Verfahren nach einem der Ansprüche 1 und 2, wobei das Rohmaterial Anis, Apfel, Fenchel, Ginseng, Hagebutten, Hibiskusblüten, Ingwerwurzel, Kümmel, Kurkuma, Rotbusch, Süßholzwurzel, Zichorienwurzel oder Mischungen davon umfasst.

4. Verfahren nach einem der Ansprüche 1 bis 3, wobei das in Schritt a) bereitgestellte Rohmaterial eine Restfeuchte von bis zu 20 Gewichtsprozent aufweist.

5. Verfahren nach einem der Ansprüche 1 bis 4, wobei das Rösten bei einer Temperatur von 100°C bis 140°C erfolgt.

6. Verfahren nach einem der Ansprüche 1 bis 6, wobei das Rösten durch Infrarotbestrahlung erfolgt.

7. Verfahren nach einem der Ansprüche 1 bis 6, umfassend die folgenden zusätzlichen Schritte:
c) Zugabe von Wasser und/oder einer geschmacksgebenden Flüssigkeit;
d) Trocknen des Rohmaterials.

8. Verfahren nach Anspruch 7, wobei die Temperatur des Rohmaterials zum Zeitpunkt der Zugabe in Schritt c) der Rösttemperatur in Schritt b) entspricht.

9. Verfahren nach einem der Ansprüche 7 und 8, wobei in Schritt c) eine geschmacksgebende Flüssigkeit zugegeben wird.

10. Verfahren nach Anspruch 9, wobei die geschmacksgebende Flüssigkeit ein Fruchtsaft oder ein Fruchtsaftkonzentrat ist.

11. Verfahren nach einem der Ansprüche 7 bis 10, wobei das Wasser und/oder die geschmacksgebende Flüssigkeit in einer Gesamtmenge von mindestens 5 Gewichtsprozent, bezogen auf die Gesamtmasse von Rohmaterial, Wasser und Flüssigkeit zugegeben werden.

12. Verfahren nach einem der Ansprüche 7 bis 11, wobei das Rohmaterial in Schritt d) auf eine Temperatur von weniger als 100°C abgekühlt wird.

13. Verfahren nach einem der Ansprüche 7 bis 12, wobei das Rohmaterial in Schritt d) bis zu einer Restfeuchte von 5 Gewichtsprozent oder weniger getrocknet werden.

14. Aufgussfähige Ware enthaltend Tee und/oder teeähnliche Ersatzstoffe, herstellbar durch das Verfahren nach einem der Ansprüche 1 bis 13.

15. Aufgussfähige Ware enthaltend 1 bis 30 Gewichtsprozent Aromen und 20 Gewichtsprozent oder weniger Trägerstoffe, bezogen auf die Masse der aufgussfähigen Ware.
